# Europäisches Patentamt

# European Patent Office

# Office européen des brevets

(11) Veröffentlichungsnummer: **0 210 121 B1**

(12) **EUROPÄISCHE PATENTSCHRIFT**

(45) Veröffentlichungstag der Patentschrift: 26.09.90

(51) Int. Cl.⁵: **G06K 15/10**

(21) Anmeldenummer: 86730090.7

(22) Anmeldetag: 29.05.86

(54) Druckelemente-Steuereinheit für das Darstellen von Schrägschrift (Kursivschrift), insbesondere in Datenstationen und auf Matrixdruckern.

(30) Priorität: 24.07.85 DE 3526369

(43) Veröffentlichungstag der Anmeldung: 28.01.87 Patentblatt 87/5

(45) Bekanntmachung des Hinweises auf die Patenterteilung: 26.09.90 Patentblatt 90/39

(84) Benannte Vertragsstaaten: AT BE CH FR GB IT LI

(56) Entgegenhaltungen:
GB-A- 1 485 309
US-A- 3 521 293
US-A- 4 071 130

IBM TECHNICAL DISCLOSURE BULLETIN, Band 18, Nr. 10, März 1976, Seiten 3390-3391, New York, US; D.A. CUMMINS et al.: "Generating slanted characters on a scanned display"

(73) Patentinhaber: MANNESMANN Aktiengesellschaft, Mannesmannufer 2, D-4000 Düsseldorf 1(DE)

(72) Erfinder: Babsch, Alfred, St.Jakob-Str. 14, D-7900 Ulm-Söflingen(DE)
Erfinder: Grüner, Manfred, Eichenhang 45, D-7900 Ulm(DE)
Erfinder: Stein, Jutta, Stuibenweg 13, D-7918 Iilertissen(DE)

(74) Vertreter: Meissner, Peter E., Dipl.-Ing. et al, Patentanwaltsbüro Meissner & Meissner, Herbertstrasse 22, D-1000 Berlin 33(DE)

**Beschreibung**

Die Erfindung betrifft eine Druckelemente-Steuereinheit für das Darstellen von Schrägschrift (Kursivschrift), insbesondere in Datenstationen und auf Matrixdruckern, die spaltenweise angeordnete Druckelemente aufweisen, über eine einem Zeichengenerator und/oder Mikroprozessor nachgeschaltete und einer Treiberschaltung für die einzelnen Druckelemente vorgeschaltete Verzögerungseinrichtung zum Auslösen der Druckelemente, wobei die Verzögerungseinrichtung aus jedem Druckelement zugeordneten, jeweils zeitlich unterschiedlich aktivierbaren Schieberegistern besteht.

Derartige Datenstationen bzw. Matrixdrucker werden bekanntlich von Computern mit großen Mengen Daten versorgt, die in kürzesten Zeiten verarbeitet werden müssen, wobei die Verarbeitung im Ergebnis entweder in der Darstellung der Zeichen auf einem Bildschirm (Terminal) oder im Ausdrucken auf einen Aufzeichnungsträger durch einen Matrixdrucker besteht. Der Computer überträgt derartige Binärsignale von seinem Kernspeicher oder von außenliegenden Speichern auf die Datenstation bzw. den Matrixdrucker. Hierbei werden die Zeilen und Spalten der Matrixanordnung durch einen Zeichengenerator bestimmt. Die Binärsignale steuern nach einer Verstärkung die Druckelemente, die entweder in der Datenstation oder auf einem Aufzeichnungsträger abgebildet werden.

Die eingangs bezeichnete Druckelemente-Steuereinheit ist bekannt (DE-OS 24 57 884). Hierbei wird die Veränderung senkrechter Zeichenteile durch verzögertes Betätigen der entsprechenden Druckelemente höherer Spaltenzahlen erreicht. Zwischen einem Zeichengenerator und einer Treiberschaltung für die Erregermagnete der Druckelemente sind jedem Druckelement zugeordnete Verzögerungseinrichtungen vorgesehen. Die Verzögerungsglieder bestehen aus Schieberegister und einem UND-Gatter, wobei durch die Anordnung zweier unterschiedlicher Eingänge und durch einen Inverter sowie durch zusammengeschaltete Eingänge und den UND-Gattern nachgeordnete UND- und ODER-Gatter die Verzögerungseinrichtung umgangen werden kann, um gerade (senkrechte) Zeichen zu schreiben.

Eine solche Steuereinheit erfüllt jedoch nicht mehr die Voraussetzungen für sehr schnelle Steuerungen, wie solche in Datenstationen und Matrixdruckern mit hoher Zeichenverarbeitungs-Schnelligkeit benötigt werden. Die bekannte Lösung berücksichtigt nämlich nicht, daß bei Matrixdruckern und Datenstationen aus Gründen der Abbildungs- bzw. Druckwegoptimierung "bidirektional" gearbeitet wird. Die bekannte Lösung ist daher nur imstande, von links nach rechts schräge Zeichen zu schreiben, jedoch nicht von rechts nach links. Die bekannte Lösung arbeitet daher nur mit halber Geschwindigkeit moderner Datenstationen bzw. Matrixdruckern.

Ein weiterer Nachteil der bekannten Lösung besteht in der starren Schräglage der erzeugten Zeichen, die nicht verändert werden kann.

Der vorliegenden Erfindung liegt die Aufgabe zugrunde, schräge Schrift in Datenstationen und auf Matrixdruckern im bidirektionalen Abbildungs- bzw. Druckverfahren zu erzeugen.

In einer zweiten Stufe der Aufgabe ist eine Einrichtung zu schaffen, die für verschiedene Schrägen von Kursivschrift eingesetzt werden kann.

Die gestellte Aufgabe wird durch die eingangs bezeichnete Druckelemente-Steuereinheit erfindungsgemäß dadurch gelöst, daß an einem Datenbus ein Modusregister angeschlossen ist, das über eine erste, den Schieberegistern vorgeschaltete Datenauswahllogik und eine den Schieberegistern nachgeschaltete, zweite Datenauswahllogik die Schieberegister für das Schreiben von senkrechten Schriftzeichen inaktiv schaltet oder für das Schreiben von schrägen Schriftzeichen aktiv schaltet, wobei im Aktivschaltzustand die Zuordnung der Schieberegister zu den Druckelement-Anschlüssen von einer ansteigenden Folge in eine abfallende Folge änderbar ist.

Aufgrund dieser auswählbaren ansteigenden bzw. abfallenden Folgen der Druckelement-Anschlüsse ist es möglich, sowohl von links nach rechts als auch von rechts nach links schräg zu schreiben, und zwar unter demselben eingestellten Schrägungswinkel. Damit ist möglich, auch bei sehr schnellen Matrixdruckern bzw. Datenstationen Kursivschrift anzuwenden.

In Ausgestaltung der Erfindung wird vorgeschlagen, daß der Schiebetakt für die Schieberegister veränderbar ist. Diese Maßnahme erlaubt nunmehr, durch Veränderung des Schiebetaktes unterschiedliche Schrägungswinkel einzuführen.

Besonders vorteilhaft ist hierbei, daß der Schiebetakt für die Schieberegister über ein Schiebezeitregister und einen Schiebetaktgenerator erzeugbar ist. Eine solche Gestaltung ermöglicht eine übersichtliche Schaltungsanordnung der im praktischen Maßstab sehr kleinen integrierten Schaltung.

Vorteilhaft ist ferner, daß für eine Druckelementspalte mit n-Druckelementen die Schieberegister eine Datenkapazität von 2 bit bis 2 n-bit in der Anzahl der Druckelemente gestuft aufweisen. Eine solche Maßnahme nimmt auf die Taktfolge bei entsprechend geringen Verzögerungszeiten Rücksicht.

Eine weitere Verbesserung besteht darin, daß den Schieberegistern und/oder dem den Schiebetakt erzeugenden Schiebezeitregister ein Zeitverzögerungsregister und ein Zeitverzögerungszähler zugeschaltet sind. Derartige Bausteine sind vorteilhaft für die digitale Bauweise.

Ein Ausführungsbeispiel der Erfindung ist in der Zeichnung dargestellt und wird im folgenden näher beschrieben.

Es zeigen:

Fig. 1 anhand eines Gesamtblockschaltbildes die Architektur der Steuereinheit gemäß der Erfindung,

Fig. 2 ein Anwendungsbeispiel der Steuereinheit auf die Druckelemente eines Matrixdruckers und

Fig. 3. das System der Schrägschrift-Darstellung bei bidirektionalem Schreiben.

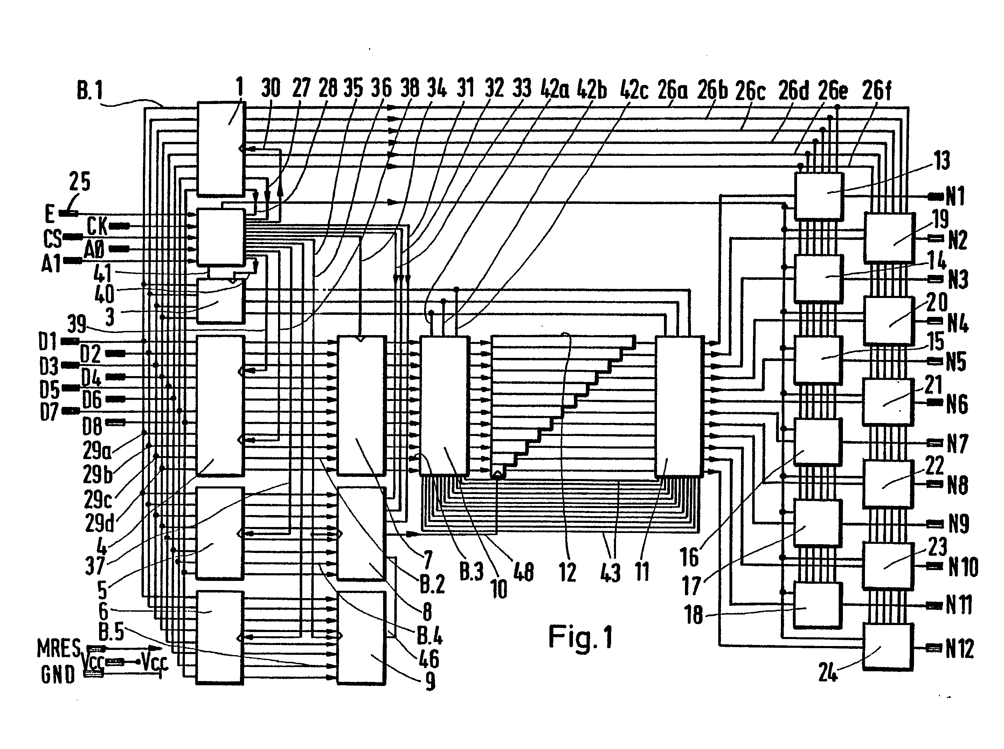

Fig. 1 zeigt als Gesamtblockschaltbild die integrierte Steuereinheit, deren Schaltung sich auf einem Chip befindet. Am Schaltungseigang liegen übereinander dargestellt folgende Bausteine (Untersysteme):
- ein Nadelzeitregister 1 (NTR = needle-time-register)
- ein Taktgenerator mit Dekoder 2 (CGR + D = clock-generation und Decoder)
- ein Modusregister 2 (MR = mode-register)
- ein Nadeldatenregister 4 (NDR = needle-data-register)
- ein Schiebezeitregister 5 (STR = shift-time-register)
- und ein Verzögerungszeitregister 6 (DTR = delaytime-register).

Die Bausteine mit den Bezeichnungen 1 bis 6 bilden eine erste "Schaltungsebene".

In einer zweiten "Schaltungsebene" befinden sich folgende Bausteine:
- ein Übernahmeregister 7 (AR = assumption-register)
- ein Verschiebetaktgenerator 8 (SCG = shiftclock-generator)
- ein Verzögerungszähler 9 (DC = delay-counter) In einer dritten "Schaltungsebene" befindet sich der Baustein mit den Schieberegistern, und zwar
- ein erste Datenauswahllogik 10 (DSL = data-select-logic)
- ein zweite Datenauswahllogik 11 (DSL = data-select-logic)
- ein Schieberegister 12 (SR = shift-register).

In einer vierten "Schaltungsebene" sind die Nadelsteuerungen 13 bis 18 (für die ersten sechs Nadeln von zwölf Nadeln insgesamt) angeordnet. In der zugehörigen fünften "Schaltungsebene" liegen die Nadelsteuerungen 19 bis 24 (für die zweiten sechs Nadeln, von den zwölf Nadeln insgesamt).

Nachfolgend werden die Bausteine 1 bis 24 als Untersysteme bezüglich ihrer Verknüpfungen und Funktionen beschrieben:

Das Nadelzeitregister 1 ist mit den Nadelsteuerungen 13 bis 24 verbunden, wobei letztere aus Zählern bestehen, deren Zeitbasis durch einen Generator 25 (E) bestimmt wird. Auf der Grundlage der Zeitbasis als einem binären, vorgegebenen Wert ergibt sich über die sechs Leitungen 26a bis 26f eine feste Zeit an den Nadelsteuerungen 13 bis 24, wobei die Nadelsteuerungen 13 bis 18 und 19 bis 24 parallel geschaltet sind.

Vom Ausgang des Nadelzeitregisters 1 sind die Leitungen 27 und 28 an die Ausgänge des Taktgenerators mit Decoder 2 geschaltet.

Ferner besteht eine Hauptverbindung durch den Datenbus B.1 mit acht Leitungen innerhalb der ersten "Schaltungsebene". Von dem Datenbus B.1 sind vier Leitungen an das Modus-Register 3 abgezweigt, ferner acht Leitungen der Druckelementanschlüsse D1 bis D8, die an dem (nicht dargestellten) Zeichengenerator liegen und vier weitere Doppelleitungen 29a, 29b, 29c und 29d, die vom Datenbus B.1 für die restlichen vier Druckelementanschlüsse (von insgesamt 12) abgeleitet sind. Der Datenbus B.1 ist weiterhin mit den acht Leitungen an das Schiebezeitregister 5, das den Schrägungswinkel der Schriftzeichen ergibt und an das Verzögerungszeitregister 6 angeschlossen.

Der Taktgenerator mit Decoder 2 ist über die Leitung 30 mit dem Ausgang des Nadelzeitregisters 1 verbunden. Weitere an die Ausgangsseite des Taktgenerators mit Decoder 2 gelegte Verbindungen bestehen aus drei Leitungen 31, 32, 33 zum Verschiebetaktgenerator 8, aus einer Leitung 34 zum Übernahmeregister 7, einer Leitung 35 mit parallelen Verbindungen zum Verschiebetaktgenerator 8 und zum Verzögerungszähler 9, aus einer Leitung 36 zum Verzögerungszeitregister 6, einer weiteren Leitung 37 zum Schiebezeitregister 5 und zwei weiteren Leitungen 38 und 39 zum Nadeldatenregister 4. Außerdem ist eine Verbindung 40 von Taktgenerator mit Decoder 2 zum Modus-Register 3 sowie eine weitere Verbindung 41 vorhanden.

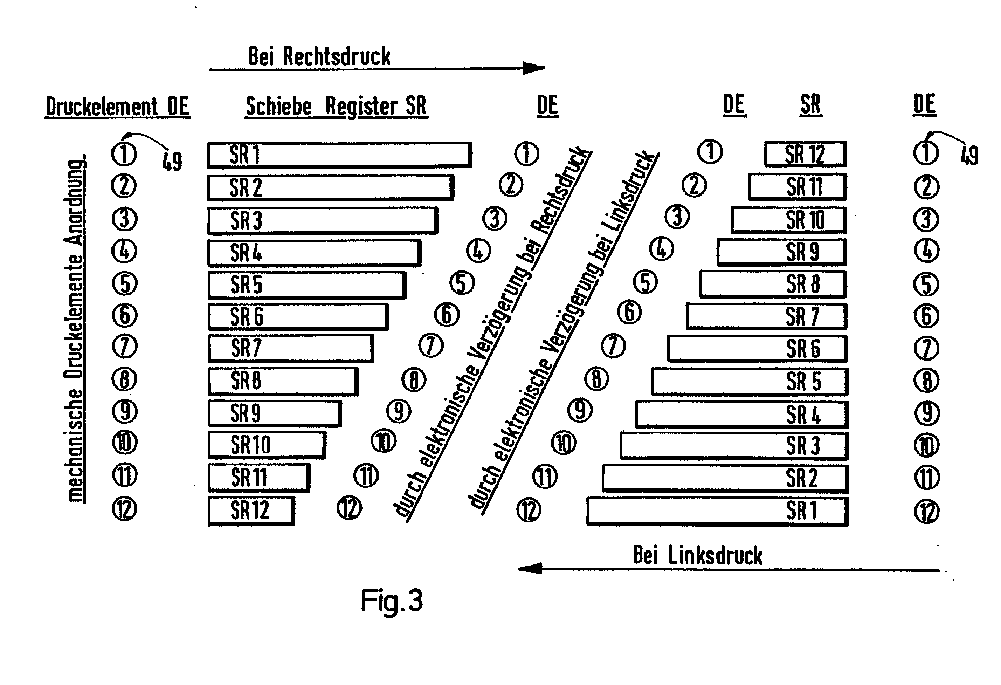

Das Modus-Register 3 ist mit drei Leitungen 42a, 42b, 42c parallel zu der ersten Datenauswahllogik 10 und zu der zweiten Datenauswahllogik 11 geschaltet. Diese drei Leitungen schalten das Schieberegister 12 entweder auf "inaktiv", d.h. auf Umgehung über die Leitung 42a und über die zwölf Leitungen 43 oder aber auf "aktiv", wobei die Leitung 42b eine Schrägstellung der Schriftzeichen in dem Schreibpaß von links nach rechts und die Leitung 42c eine identische Schrägstellung der Schriftzeichen in einem Schreibpaß von rechts nach links ergeben; Einzelheiten hierzu werden anhand der Fig. 3 beschrieben.

Der Taktgenerator mit Decoder 2 weist am Eingang die Anschlüsse 25 (E) für den Takt auf, ferner CK für Clock (als Eingang für die unmittelbare Datenübernahme in das Übernahmeregister 7), weiterhin CS (chip select) für die Anwahl des Mikroprozessors im Drucker bzw. in einer Datenstation, außerdem A0 und A1 als Adreßleitungen für die logischen Werte 1 oder 0.

Das Modus-Register 3 steuert die senkrechte Schreibweise, die schräge Schreibweise von links oder die schräge (identische) Schreibweise von rechts wie bereits beschrieben.

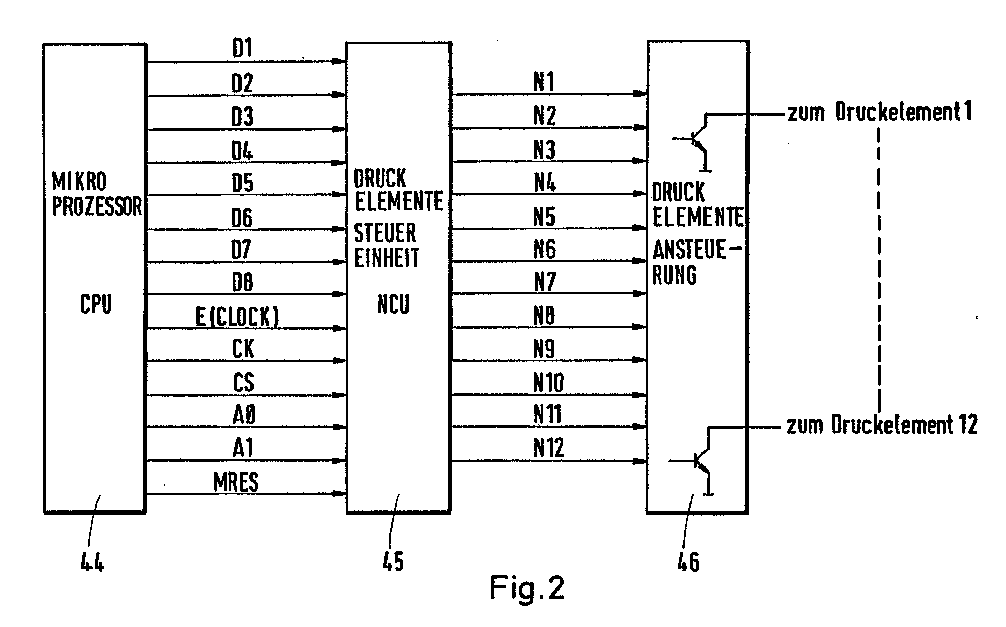

Von der CPU 44 (Fig. 2) werden die Daten für die Druckelemente D1 bis D8 (bzw. D9 bis D12) über den E-Takt, die CK-Übernahme, das Mikroprozessor-Auswahlsignal CS und die Signale für die Adressleitungen A logisch Null und A1 sowie Signale MRES (= master reset für den Anfangszustand) der in Fig. 1 dargestellten Steuereinheit 45 zugeführt.

Für einen Matrixdrucker der Nadelbauart (der Tintenstrahlbauart, des Thermotransfersystems und dgl.) ist eine solche prinzipielle Schaltungsanordnung in Fig. 2 dargestellt. Die angewählte Schrägschrift-Steuereinheit 45 gibt die Nadelinformationen N1 bis N12 an eine Treiberschaltung 46 und diese an das jeweilige Druckelement D1 bis D12 weiter.

Der Schrägungswinkel für die einzelnen Schriftzeichen wird nunmehr durch das Schiebezeitregister 5 erzeugt, das angibt, wie schnell der Verschiebetaktgenerator 8 die Taktfolge zu den einzelnen Schieberegistern des Schieberegisters 12 weitergeben muß. Da jedoch auch bei Schrägschrift die Zeichen, selbst wenn sie aus den vorgesehenen senkrechten Schreibspalten herausfallen, trotzdem noch senkrecht genau untereinander (in aufeinanderfolgenden Zeilen) stehen müssen, ist das Verzögerungszeitregister 6 vorgesehen. Das Verzögerungszeitregister 6 wird anfangs geladen und behält den Ladungswert während des Betriebs. Die Schrägstellung der Schriftzeichen wird daher allein über das Schiebezeitregister 5 und den Verschiebetaktgenerator 8 eingestellt und gehalten.

Der Verschiebetaktgenerator 8 und der Verzögerungszähler 9 sind über eine Leitung 47 verbunden. Die Schaltung der erfindungsgemäßen Druckelemente-Steuereinheit 45 ist an Masse (GND = ground) an eine Versorgungsspannung VCC und an eine Leitung für das erwähnte Anfangssignal (MRES) angeschlossen (Fig. 1).

Das Nadeldatenregister 4 und das Übernahmeregister 7 sind über einen Datenbus B.2, das Übernahmeregister 7 mit der ersten Datenauswahllogik 10 über einen Datenbus B.3 verbunden (jeweils zwölf Leitungen).

Ebenso werden die Daten von dem Schiebezeitregister 5 über einen Datenbus B.4 (mit acht Leitungen = 8 bit parallel) auf den Verschiebetaktgenerator 8 übertragen. Der Verschiebetaktgenerator 8 ist über eine Datenleitung 48 an die zwölf Schieberegister 12 angeschlossen. Ferner ist ein Datenbus B.5 (ebenfalls 8 bit parallel) zwischen dem Verzögerungszeitregister 6 und dem Verzögerungszähler 9 vorgesehen.

Die Funktionsweise des Schieberegisters 12 ergibt sich aus Fig.3: Bei "Rechtsdruck" (Pfeil) werden die jeweils in einer senkrechten Spalte 49 angeordneten Druckelemente D1 bis D12 (jeweils mit Kreis bezeichnet) mit unterschiedlich langen Schieberegistern SR1 bis SR12 betätigt, wobei sich die "Lange der Schieberegister" auf die Datenkapazität bezieht. Die größte Verzögerung erfährt hier das Druckelement D1 und die geringste Verzögerung das Druckelement D12.

Bei "Linksdruck" (Pfeil) erfährt hingegen, weil zuerst gedruckt, das Druckelement D1 durch die elektronische Verlagerung der Schieberegister SR1 bis SR12 in SR12 bis SR1 die geringste Verzögerung und das Druckelement D12 die größte Verzögerung, weil bei einer schrägen Linie von links unten nach rechts oben ansteigend, das Druckelement D12 als letztes (zeitlich) abgedruckt wird.

Nachfolgend wird noch eine Übersicht der Gesamtfunktion der Druckelemente-Steuereinheit 45 z. B. für einen Nadeldrucker, Tintenstrahldrucker, Thermotransferdrucker u. dgl. gegeben:

Um die erfindungsgemäße Nadelsteuereinheit betreiben zu können, müssen vorab das Nadelzeitregister 1, das Modusregister 3, das Schiebezeitregister 5 und das Verzögerungszeitregister 6 mit den entsprechenden Informationen geladen werden. Das Laden dieser Register geschieht mit den Signalen A0, A1, CS und E, welche durch die Logik des Taktgenerators mit Dekoder 2 diese Register selektiert bzw. ansteuert.

Nach dem Laden bzw. Ansteuern kann mit der Nadeldatenübernahme begonnen werden, indem ebenfalls wie oben beschrieben über die Logik des Taktgenerators mit Dekoder 2 die Daten in das Nadeldatenregister 4 übernommen werden. Diese Datenübernahme kann asynchron, d.h. zeitlich vor dem aktuellen Zeitpunkt, übertragen werden, denn erst mit einem separaten Zeitgeber-Signal CK oder einem über A0/A1, CS und E gebildeten Takt wird die Nadelinformation zeitgerecht in das Übernahmeregister 7 übernommen und von dort direkt über die Datenauswahllogik 10 an die Schieberegister 12 weitergegeben.

Sobald die Übernahme erfolgt ist, kann bereits die nächste Information ins Nadeldatenregister 4 übernommen werden.

Die an den Schieberegistern 12 eingangs anstehenden Daten werden entsprechend dem Schiebetakt mehr oder weniger schnell durchgeschoben. Ein am Schieberegister-Ausgang angelangtes Signal triggert die folgenden Nadelsteuerungen 13 bis 18 bzw. 19 bis 24, welche den Ausgang einer Information darstellen.

**Patentansprüche**

1. Druckelemente-Steuereinheit (NCU, 45) für das Darstellen von Schrägschrift (Kursivschrift) auf Matrixdruckern, die spaltenweise angeordnete Druckelemente aufweisen, über eine einem Zeichengenerator und/oder Mikroprozessor nachgeschaltete und einer Treiberschaltung für die einzelnen Druckelemente vorgeschaltete Verzögerungseinrichtung zum Auslösen der Druckelemente, wobei die Verzögerungseinrichtung aus jedem Druckelement zugeordneten, jeweils zeitlich unterschiedlich aktivierbaren Schieberegistern besteht,
dadurch gekennzeichnet,
daß an einem Datenbus (B.1) ein Modusregister (3) angeschlossen ist, das über eine erste, den Schieberegistern (SR1 bis SR12) vorgeschaltete Datenauswahllogik (10) und eine den Schieberegistern (SR1 bis SR12) nachgeschaltete, zweite Datenauswahllogik (11) die Schieberegister (SR1 bis SR12) für das Schreiben von senkrechten Schriftzeichen inaktiv schaltet oder für das Schreiben von schrägen Schriftzeichen aktiv schaltet, wobei im Aktivschaltzustand die Zuordnung der Schieberegister (SR1 bis SR12) zu den Druckelement-Anschlüssen (N1 bis N12) von einer ansteigenden Folge (N1 bis N12) in eine abfallende Folge (N12 - N1) änderbar ist.

2. Druckelemente-Steuereinheit nach Anspruch 1, dadurch gekennzeichnet, daß der Schiebetakt für die Schieberegister (SR1 bis SR12) veränderbar ist.

3. Druckelemente-Steuereinheit nach Anspruch 2, dadurch gekennzeichnet, daß der Schiebetakt für die Schieberegister (SR1 bis SR12) über ein Schiebezeitregister (5) und einen Schiebetaktgenerator (8) erzeugbar ist.

4. Druckelemente-Steuereinheit nach Anspruch 1, dadurch gekennzeichnet, daß für eine Druckelementspalte (49) mit n-Druckelementen die Schieberegister eine Datenkapazität von 2 bit bis 2 n-bit in der Anzahl der Druckelemente gestuft aufweisen.

5. Druckelemente-Steuereinheit nach den Ansprüchen 1 bis 4, dadurch gekennzeichnet, daß den Schieberegistern (SR1 bis SR12 bzw. SR12 bis SR1) und/oder dem den Schiebetakt erzeugenden Schiebezeitregister (5) ein Zeitverzögerungsregister (6) und ein Zeitverzögerungszähler (9) zugeschaltet sind.

## Claims

1. A print element control unit (NCU, 45) for representing slanted text (italics) in matrix printers which have print elements arranged in columns, via a delay unit succeeding a character generator and/or microprocessor and preceding a drive circuit for the individual print elements for triggering the print elements, with the delay unit consisting of shift registers allocated to each print element which can each be activated at different times, characterised in that a mode register (3) is connected to a data bus (B.1), which register inactively switches the shift registers (SR1 to SR12) for writing vertical characters or actively switches them for writing slanted characters via a first data-select logic (10) preceding the shift registers (SR1 to SR12) and a second data-select logic (11) succeeding the shift registers (SR1 to SR12), with the allocation of the shift registers (SR1 to SR12) to the print element connections (N1 to N12) being changeable from an ascending sequence (N1 to N12) to a descending sequence (N12 - N1) in the active switching state.

2. A print element control unit according to Claim 1, characterised in that the shift clock for the shift registers (SR1 to SR12) can be altered.

3. A print element control unit according to Claim 2, characterised in that the shift clock for the shift registers (SR1, to SR12) can be generated via a shift-time register (5) and a shift-clock generator (8).

4. A print element control unit according to Claim 1, characterised in that for a print element column (49) with sprint elements the shift registers have a data capacity of 2 bits to 2 $\underline{n}$ bits stepped in the number of print elements.

5. A print element control unit according to Claims 1 to 4, characterised in that the shift registers (SR1 to SR12 or SR12 to SR1) and/or the shift-time register (5) generating the shift clock are connected to a time delay register (6) and a time delay counter (9).

## Revendications

1. Organe de commande d'éléments d'impression (NCU, 45) pour la représentation de l'écriture cursive (italique) sur des imprimantes à matrice, qui présentent des éléments d'impression agencés en colonnes, par l'intermédiaire d'un dispositif de temporisation pour déclencher les éléments d'impression, placé en amont d'un circuit d'attaque pour les éléments d'impression individuels et en aval d'un générateur de caractères et/ou d'un microprocesseur, le dispositif de temporisation étant constitué de registres de décalage, associés à chaque élément d'impression, pouvant être activés à chaque fois de façon différente dans le temps, caractérisé en ce qu'un registre de mode (3) est raccordé à un bus de données (B.1), registre qui rend inactifs pour l'écriture de caractères bâtons ou rend actifs pour l'écriture de caractères cursifs, les registres de décalage (SR1 à SR12), par l'intermédiaire d'une première logique de sélection de données (10) placée en amont des registres de décalage (SR1 à SR12) et d'une seconde logique de sélection de données (11) placée en aval des registres de décalage (SR1 à SR12), par quoi, dans l'état actif, l'affectation des registres de décalage (SR1 à SR12) aux connexions (N1 à N12) des éléments d'impression peut passer d'une suite croissante (N1 à N12) à une suite décroissante (N12-N1).

2. Organe de commande d'éléments d'impression selon la revendication 1, caractérisé en ce que le rythme de décalage des registres de décalage (SR1 à SR12) est modifiable.

3. Organe de commande d'éléments d'impression selon la revendication 2, caractérisé en ce que le rythme de décalage des registres de décalage (SR1 à SR12) peut être créé par un registre temporel de décalage (5) et un générateur de rythme de décalage (8).

4. Organe de commande d'éléments d'impression selon la revendication 1, caractérisé en ce que, pour une colonne (49) de n éléments d'impression, les registres de décalage présentent une capacité de données de 2 bits à 2 n bits, échelonnée selon le nombre des éléments d'impression.

5. Organe de commande d'éléments d'impression selon les revendications 1 à 4, caractérisé en ce qu'un registre de temporisation (6) et un compteur de temporisation (9) sont raccordés aux registres de décalage (SR1 à SR12 ou SR12 à SR1) et/ou au registre temporel de décalage (5) créant le rythme de décalage.

Fig. 1

zum Druckelement 1

zum Druckelement 12

**DRUCK ELEMENTE ANSTEUE-RUNG** — 46

N1 N2 N3 N4 N5 N6 N7 N8 N9 N10 N11 N12

**DRUCK ELEMENTE STEUER EINHEIT NCU** — 45

D1 D2 D3 D4 D5 D6 D7 D8 E(CLOCK) CK CS A0 A1 MRES

**MIKRO PROZESSOR CPU** — 44

Fig.2

EP 0 210 121 B1

**Bei Rechtsdruck** →

Druckelement DE     Schiebe Register SR     DE          DE     SR          DE

mechanische Druckelemente Anordnung.

① 49    SR 1     ①          durch elektronische Verzögerung bei Rechtsdruck          durch elektronische Verzögerung bei Linksdruck     ①     SR 12     ① 49

② SR 2 ② ② SR 11 ②

③ SR 3 ③ ③ SR 10 ③

④ SR 4 ④ ④ SR 9 ④

⑤ SR 5 ⑤ ⑤ SR 8 ⑤

⑥ SR 6 ⑥ ⑥ SR 7 ⑥

⑦ SR 7 ⑦ ⑦ SR 6 ⑦

⑧ SR 8 ⑧ ⑧ SR 5 ⑧

⑨ SR 9 ⑨ ⑨ SR 4 ⑨

⑩ SR 10 ⑩ ⑩ SR 3 ⑩

⑪ SR 11 ⑪ ⑪ SR 2 ⑪

⑫ SR 12 ⑫ ⑫ SR 1 ⑫

← **Bei Linksdruck**

Fig. 3